# NEUE EUROPÄISCHE PATENTSCHRIFT

(11) **EP 1 646 664 B2**
(45) Veröffentlichungstag und Bekanntmachung des Hinweises auf die Entscheidung über den Einspruch: **12.10.2011**
(45) Hinweis auf die Patenterteilung: 04.10.2006
(21) Anmeldenummer: 04740794.5
(22) Anmeldetag: 08.07.2004
(51) Int. Cl.: C08F 218/08, C08F 2/30, C08F 283/00

(54) **VERFAHREN ZUR HERSTELLUNG VON POLYVINYLALKOHOL-FREIEN, WÄSSRI GEN POLYMERDISPERSIONEN**
METHOD FOR THE PRODUCTION OF POLYVINYL ALCOHOL-FREE, AQUEOUS POLYMER DISPERSIONS
PROCEDE DE FABRICATION DE DISPERSIONS POLYMERES AQUEUSES EXEMPTES D ALCOOLS POLYVINYLIQUES

(30) Priorität: 17.07.2003 DE 10332621
(43) Veröffentlichungstag der Anmeldung: 19.04.2006
(73) Patentinhaber: Wacker Chemie AG, 81737 München (DE)
(72) Erfinder: STARK, Kurt, 84508 Burgkirchen (DE); HÖGL, Christian, 84367 Reut (DE)
(74) Vertreter: Schuderer, Michael
(86) Internationale Anmeldenummer: PCT/EP2004/007490
(87) Internationale Veröffentlichungsnummer: WO 2005/014675

(56) Entgegenhaltungen:
- EP-A1- 0 558 980
- EP-A2- 0 037 150
- WO-A1-96/08597
- WO-A1-02/064637
- WO-A2-02/079270
- GB-A- 1 413 162
- US-A- 3 218 281
- US-A- 3 692 723
- US-A- 3 746 671
- US-A- 4 287 329
- US-A- 6 028 139

## Beschreibung

Die Erfindung betrifft ein Verfahren zur Herstellung von Polyvinylalkohol-freien, wässrigen Polymerdispersionen in Gegenwart einer Stabilisatorkombination aus Polyalkylenglykolen und nichtionischen Emulgatoren.

Schutzkolloid-stabilisierte Polymerisate werden vor allem in Form deren wässriger Dispersionen oder in Wasser redispergierbarer Polymerpulver in vielerlei Anwendungen, beispielsweise als Beschichtungsmittel oder Klebemittel für die unterschiedlichsten Substrate, wie als zementäre Fliesenkleber, eingesetzt. Als Schutzkolloide werden in der Regel Polyvinylalkohole eingesetzt. Der Einsatz von Polyvinylalkohol ist erstrebenswert, weil dieser im Vergleich zu Systemen, die durch niedermolekulare Verbindungen (Emulgatoren) stabilisiert sind, selbst zur Festigkeit beiträgt. Ein Nachteil bei der Verwendung von Polyvinylalkoholen zur Stabilisierung von Polymerdispersionen ist die Zunahme der Viskosität der Polymerdispersion mit zunehmender Standzeit.

Aus der WO-A 98/39371 ist ein Verfahren zur Herstellung von schutzkolloidfreien Vinylester-Copolymerisaten bekannt, bei dem (Meth)acrylamid copolymerisiert wird, und die Polymerisation in Gegenwart von anionischen oder nichtionischen Emulgatoren und Persulfat-Initiator durchgeführt wird. In der EP-A 518406 wird zur Herstellung von Polyvinylalkohol-freien Dispersionen von Vinylester-Ethylen-Copolymerisaten vorgeschlagen, stabilisierende Comonomere, unter Einhaltung definierter Gewichtsverhältnisse zu copolymerisieren. Die US-A 5530056 betrifft Acrylatcopolymer-Latices, wobei zur Stabilisierung polymerisierbare Polyethylenglykol-Monomere copolymerisiert werden. In der EP-A 1114833 wird gelehrt, Vinylacetat-Ethylene-Copolymer-Dispersionen in Gegenwart eines Stabilsatorgemisches aus Polyvinylalkohol und Polyethylenglykol herzustellen.

Der Erfindung lag die Aufgabe zugrunde, ein Verfahren zur Herstellung von wässrigen Polymerdispersionen zur Verfügung zu stellen, welches im Gegensatz zu Polyvinylalkohol-stabilisierten Polymerdispersionen zu Produkten führt, welche sich auch bei längerer Standzeit durch deren Viskositätskonstanz auszeichnen. Darüberhinaus sollten die Produkte enge Teilchengrößenverteilung aufweisen (mittlere Teilchengröße Dv ≤ 1 µm), und es sollten stabile Dispersionen erhalten werden (Vermeidung von Koagulatbildung und Siebrückstandsbildung).

Gegenstand der Erfindung ist ein Verfahren zur Herstellung von Polyvinylalkohol-freien, wässrigen Polymerdispersionen mittels radikalischer Polymerisation von einem oder mehreren ethylenisch ungesättigten Monomeren in wässrigem Medium, dadurch gekenzeichnet, dass die Polymerisation in Gegenwart eines Stabilisatorsystems durchgeführt wird, enthaltend
a) ein oder mehrere Polyalkylenoxide mit gleichen oder verschiedenen Struktureinheiten aus der Gruppe umfassend -(CH₂)ₙ-O- mit n = 2 bis 4, -CH₂-CHR-O- mit R = C₁- bis C₁₅₋Alkyl, -CH₂-CHOR'-O- mit R' = H, C₁- bis C₁₅-Alkyl, welche im Falle von Alkylenoxid-Mischpolymerisaten die AlkylenoxidEinheiten in statistischer Verteilung enthalten, und mit gleichen oder verschiedenen Endgruppen R" aus der Gruppe umfassend H-, OH-Gruppe, Alkyl-Gruppe und O-Alkyl-Gruppe, wobei der Alkylrest unverzweigt oder verzweigt sein kann und ein C₁- bis C₄-Alkylrest ist, und
b) ein oder mehrere Blockcopolymere aus mindestens zwei verschiedenen Alkylenoxiden mit 2 bis 4 C-Atomen.

Vorzugsweise ist R ein C₁- bis C₄-Alkylrest; vorzugsweise ist R' H, C₁- bis C₄-Alkyl; vorzugsweise ist R" ein Rest aus der Gruppe umfassend H-, OH-Gruppe, Alkyl-Gruppe und O-Alkyl-Gruppe, wobei der Alkylrest oder Alkoxyrest unverzweigt oder verzweigt sein kann und einen C₁- bis C₄-Rest enthält.

Bevorzugt werden Polyalkylenoxide a) mit den Struktureinheiten -(CH₂)ₙ-O- mit n = 2 bis 4, welche gleiche oder verschiedene Endgruppen enthalten, aus der Gruppe umfassend H-, OH-, CH₃-, CH₃O-, C₂H₅-, C₂H₅O-Gruppe. Besonders bevorzugt werden Polyethylenglykole (PEO), Polypropylenglykole (PPO) sowie Mischpolymerisate, welche Ethylenoxid- und Propylenoxid-Einheiten statistisch verteilt enthalten. Am meisten bevorzugt werden Polyethylenglykole (PEO) und Polypropylenglykole (PPO) mit OH-Endgruppen. Das zahlenmittlere Molekulargewicht Mn der Polyalkylenoxide beträgt 100 bis 100000 g/mol, vorzugsweise 1000 bis 50000 g/mol. Im allgemeinen werden 0.1 bis 10 Gew.-%, vorzugsweise 0.5 bis 5 Gew.-% Polyalkylenglykol, jeweils bezogen auf das Gesamtgewicht der Monomere, eingesetzt.

Als Endgruppen R" sind solche zu verstehen, welche an den Enden der Polyalkylenoxidkette sitzen:
R"[-(CH₂)ₙ-O]ₘ-R" oder R'' [-CH₂-CHR-O]ₘ-R" oder R''[-CH₂-CHOR'-O]ₘ-R".

Geeignete nichtionische Emulgatoren b) sind Blockcopolymere aus mindestens zwei verschiedenen Alkylenoxiden mit 2 bis 4 C-Atomen. Es können auch Gemische der genannten Emulgatoren b) eingesetzt werden. Im allgemeinen werden 0.5 bis 10 Gew.-%, vorzugsweise 1 bis 5 Gew.-% nichtionischer Emulgator b), jeweils bezogen auf das Gesamtgewicht der Monomere, eingesetzt.

Geeignete ethylenisch ungesättigte Monomere sind solche aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide.

Geeignete Vinylester sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 13 C-Atomen, beispielsweise VeoVa9^{R} oder VeoVa10^{R} (Handelsnamen der Firma Shell). Besonders bevorzugt ist Vinylacetat, am meisten bevorzugt ist eine Kombination von Vinylacetat mit α-verzweigten Monocarbonsäuren mit 5 bis 11 C-Atomen, wie VeoVa9^{R} und VeoVa10^{R}.

Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat.

Geeignete Diene sind 1,3-Butadien und Isopren. Beispiele für copolymerisierbare Olefine sind Ethen und Propen. Als Vinylaromaten können Styrol und Vinyltoluol copolymerisiert werden. Aus der Gruppe der Vinylhalogenide werden üblicherweise Vinylchlorid, Vinylidenchlorid oder Vinylfluorid, vorzugsweise Vinylchlorid, eingesetzt.

Gegebenenfalls können noch 0.05 bis 30 Gew.-%, bezogen auf das Gesamtgewicht der ethylenisch ungesättigten Monomere, Hilfsmonomere copolymerisiert werden. Beispiele für Hilfsmonomere sind ethylenisch ungesättigte Mono- und Dicarbonsäuren oder deren Salze, vorzugsweise Crotonsäure, Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Als Hilfsmonomere geeignet sind auch kationische Monomere wie Diallyldimethylammoniumchlorid (DADMAC), 3-Trimethylammoniumpropyl(meth)acrylamidchlorid (MAPTAC) und 2-Trimethylammoniumethyl(meth)acrylatchlorid. Ferner sind geeignet Vinylether, Vinylketone, weitere vinylaromatische Verbindungen, die auch Heteroatome besitzen können.

Geeignete Hilfsmonomere sind auch polymerisierbare Silane bzw. Mercaptosilane. Bevorzugt sind γ-Acryl- bzw. γ-Methacryloxypropyltri(alkoxy)silane, α-Methacryloxymethyltri(alkoxy)silane, γ-Methacryloxypropyl-methyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen-, Ethoxyethylen-, Methoxypropylenglykolether- bzw. Ethoxypropylenglykolether-Reste eingesetzt werden können. Beispiele hierfür sind Vinyltrimethoxysilan, Vinyltriethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxyethoxy)silan, Trisacetoxyvinylsilan, 3-(Triethoxysilyl)propylbernsteinsäureanhydridsilan. Bevorzugt werden auch 3-Mercaptopropyltriethoxysilan, 3-Mercaptopropyltrimethoxysilan und 3-Mercaptopropylmethyldimethoxysilan.

Weitere Beispiele sind funktionalisierte (Meth)acrylate, insbesondere Epoxy-funktionelle wie Glycidylacrylat, Glycidylmethacrylat, Allylglycidether, Vinylglycidether, oder Hydroxyalkylfunktionelle wie Hydroxyethyl(meth)acrylat, oder substituierte oder unsubstituierte Aminoalkyl(meth)acrylate, oder cyclische Monomere, wie N-Vinylpyrrolidon.

Geeignet sind zusätzlich auch polymerisierbare Silikonmakromere mit mindestens einer ungesättigten Gruppe, wie lineare oder verzweigte Polydialkylsiloxane mit C₁- bis C₆-Alkylrest, und mit einer Kettenlänge von 10 bis 1000, bevorzugt 50 bis 500 SiO(CₙH₂ₙ₊₁)₂-Einheiten, welche ein oder zwei terminale, oder ein oder mehrere kettenständige, polymerisierbare Gruppen (funktionelle Gruppen) enthalten. Beispiele hierfür sind Polydialkylsiloxane mit einer oder zwei Vinyl-, Acryloxyalkyl-, Methacryloxyalkyl-oder Mercaptoalkyl-Gruppen, wobei die Alkylgruppen gleich oder verschieden sein können und 1 bis 6 C-Atome enthalten. Bevorzugt werden α,ω-Divinyl-Polydimethylsiloxane, α,ω-Di-(3-acryloxypropyl)-Polydimethylsiloxane, α,ω-Di-(3-methacryloxypropyl)-Polydimethylsiloxane, α-Monovinyl-Polydimethylsiloxane, α-Mono-(3-acryloxypropyl)-Polydimethylsiloxane, α-Mono-(3-methacryloxypropyl)-Polydimethylsiloxane, sowie Silikone mit kettenübertragenden Gruppen wie α-Mono-(3-mercaptopropyl)-Polydimethylsiloxane oder α,ω-Di-(3-mercaptopropyl)-Polydimethylsiloxane. Geeignet sind auch die polymerisierbaren Silikonmakromere, wie sie in der EP-A 614924 beschrieben sind.

Weitere Beispiele sind vorvernetzende Comonomere wie mehrfach ethylenisch ungesättigte Comonomere, beispielsweise Divinyladipat, Divinylbenzol, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Bevorzugt sind die nachfolgend genannten Copolymerzusammensetzungen, welche gegebenenfalls noch die genannten Hilfsmonomere enthalten können:
Polymerisate von Vinylacetat;
Vinylester-Copolymerisate von Vinylacetat mit weiteren Vinylestern wie Vinyllaurat, Vinylpivalat, Vinyl-2-ethylhexansäure-ester, Vinylester einer alpha-verzweigten Carbonsäure, insbesondere Versaticsäurevinylester (VeoVa9^{R}, VeoVa10^{R});
Vinylester-Ethylen-Copolymerisate, wie Vinylacetat-Ethylen-Copolymerisate, welche gegebenenfalls noch weitere Vinylester wie Vinyllaurat, Vinylpivalat, Vinyl-2-ethylhexansäureester, Vinylester einer alpha-verzweigten Carbonsäure, insbesondere Versaticsäurevinylester (VeoVa9^{R}, VeoValo^{R}), oder Fumarsäure- oder Maleinsäurediester enthalten;
Vinylester-Ethylen-Copolymerisate, wie Vinylacetat-Ethylen-Copolymerisate, welche gegebenenfalls noch weitere Vinylester wie Vinyllaurat, Vinylpivalat, Vinyl-2-ethylhexansäureester, Vinylester einer alpha-verzweigten Carbonsäure, insbesondere Versaticsäurevinylester (VeoVa9^{R}, VeoVa10^{R}) und mindestens ein polymerisierbares Silikonmakromer enthalten;
Vinylester-Ethylen-Vinylchlorid-Copolymerisate, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure, insbesondere Versaticsäurevinylester (VeoVa9^{R}, VeoVa10^{R}), enthalten sind;
Vinylester-Acrylsäureester-Copolymerisate mit Vinylacetat und/oder Vinyllaurat und/oder Versaticsäure-Vinylester und Acrylsäureester, insbesondere Butylacrylat oder 2-Ethylhexylacrylat, welche gegebenenfalls noch Ethylen enthalten;
Acrylsäureester-Copolymerisate mit n-Butylacrylat und/oder 2-Ethylhexylacrylat;
Methylmethacrylat-Copolymerisate mit Butylacrylat und/oder 2-Ethylhexylacrylat, und/oder 1,3-Butadien;
Styrol-1,3-Butadien-Copolymerisate und Styrol-(Meth)Acrylsäureester-Copolymerisate wie Styrol-Butylacrylat, Styrol-Methylmethacrylat-Butylacrylat oder Styrol-2-Ethylhexylacrylat, wobei als Butylacrylat n-, iso-, tert-Burylacrylat eingesetzt werden kann.

Am meisten bevorzugt werden Vinylester-Ethylen-Copolymerisate wie Vinylacetat-Ethylen-Copolymerisate, sowie Copolymerisate von Vinylacetat und Ethylen und Vinylester einer α-verzweigten Carbonsäure mit 9 oder 10 C-Atomen (VeoVa9^{R}, VeoVa10^{R}), und insbesondere Copolymerisate von Vinylacetat, Ethylen, Vinylester einer α-verzweigten Carbonsäure mit 9 oder 10 C-Atomen (VeoVa9^{R}, VeoVa10^{R}) mit copolymerisierbaren Silikonmakromeren; mit einem Ethylenanteil von vorzugsweise 2 bis 30 Gew.-%, welche gegebenenfalls zusätzlich noch Hilfsmonomeranteile in den angegebenen Mengen enthalten können.

Die ethylenisch ungesättigten Monomere werden dabei vorzugsweise so ausgewählt, dass wässrige Copolymerdispersionen und wässrige Redispersionen der Copolymerpulver resultieren mit einer Glasübergangstemperatur Tg von -50°C bis +50°C. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Dispersionen werden mittels radikalischer Polymerisation in wässrigem Medium, vorzugsweise Emulsionspolymerisation, hergestellt. Die Polymerisation wird üblicherweise in einem Temperaturintervall von 20°C bis 100°C durchgeführt, insbesondere zwischen 40°C und 80°C. Die Initiierung erfolgt mittels der gebräuchlichen Radikalbildner, welche vorzugsweise in Mengen von 0.01 bis 5.0 Gew.-%, bezogen auf das Gesamtgewicht der Monomere, eingesetzt werden. Als Initiatoren werden vorzugsweise anorganische Peroxide wie Ammonium-, Natrium-, Kaliumperoxodisulfat oder Wasserstoffperoxid, entweder alleine oder in Kombination mit Reduktionsmitteln wie Natriumsulfit, Natriumhydrogensulfit, Natriumformaldehydsulfoxylat oder Ascorbinsäure, verwendet. Es können auch wasserlösliche organische Peroxide, beispielsweise t-Butylhydroperoxid, Cumolhydroperoxid, üblicherweise in Kombination mit Reduktionsmittel, eingesetzt werden, oder aber auch wasserlösliche Azoverbindungen.

Bei der Copolymerisation mit gasförmigen Monomeren wie Ethylen und Vinylchlorid wird unter Druck gearbeitet, im allgemeinen zwischen 1 und 100 bar_{abs}.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Zur Stabilisierung der Dispersion können gegebenenfalls zusätzlich weitere anionische Emulgatoren verwendet werden. Geeignete anionische Emulgatoren sind beispielsweise Alkylsulfate, Alkylsulfonate, Alkylarylsulfate, sowie Sulfate oder Phosphate von Kondensationsprodukten des Ethylenoxides mit linearen oder verzweigten Alkylalkoholen und mit 3 bis 25 EO-Einheiten, Alkylphenolen, und Mono- oder Diester der Sulfobernsteinsäure. Falls zusätzlicher anionischer Emulgator eingesetzt wird, beträgt dessen Menge mindestens 0.1 bis 5 Gew.-%, bezogen auf das Gesamtgewicht der eingesetzten Monomere.

Die Polymerisation kann unabhängig vom Polymerisationsverfahren mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Die Comonomeren und gegebenenfalls die Hilfsmonomeren können zur Herstellung der Dispersion alle vorgelegt werden (Batch-Prozess), oder es wird ein Teil der Monomeren vorgelegt und der Rest dosiert (Semibatch-Prozess).

Die Polyalkylenoxide a) und Emulgatoren b) können zur Herstellung der Dispersion vorgelegt werden, oder zudosiert werden, oder es wird ein Teil vorgelegt und der Rest dosiert. Dabei können die genannten Substanzen auch allein oder als Voremulsion mit den Comonomeren dosiert werden.

Bei der Copolymerisation von gasförmigen Monomeren wie Ethylen wird die gewünschte Menge durch die Einstellung eines bestimmten Drucks eingebracht. Der Druck, mit dem das gasförmige Monomer eingebracht wird, kann anfangs auf einen bestimmten Wert eingestellt werden und sich während der Polymerisation abbauen, oder der Druck wird während der gesamten Polymerisation konstant gelassen. Letztere Ausführungsform ist bevorzugt.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere und weitere flüchtige, nicht wässrige Bestandteile der Dispersion können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 25 bis 70 Gew.-%, vorzugsweise von 45 bis 65 Gew.-%.

Zur Herstellung von in Wasser redispergierbaren Polymerpulvern werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Geeignete Verdüsungshilfen sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)-acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bei der Verdüsung hat sich vielfach ein Gehalt von bis zu 1.5 Gew.-% Antischaummittel, bezogen auf das Basispolymerisat, als günstig erwiesen. Zur Verbesserung der Verblockungsstabilität kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate.

Die Polyvinylalkohol-freien, wässrigen Polymerdispersionen mit der erfindungsgemäßen Stabilisatorkombination zeichnen sich durch Viskositätskonstanz, durch ein völlig neues rheologisches Verhalten, durch hohe Stabilität und durch eine sehr vorteilhafte Teilchengrößenverteilung aus. Ursache dafür ist offensichtlich eine synergistische Wirkung der Polyalkylenoxid-Komponente a) mit der nichtionischen Emulgatorkomponente b).

Die Polymerisate in Form deren wässrigen Dispersionen und in Wasser redispergierbaren Pulver eignen sich zur Anwendung in Klebemitteln und Beschichtungsmitteln, zur Verfestigung von Fasern oder anderen partikulären Materialien, beispielsweise für den Textilbereich. Sie eignen sich auch als Modifizierungsmittel und als Hydrophobierungsmittel. Sie können, insbesondere bei der Copolymerisation von Siliciumverbindungen, ferner im Bereich Polish, und in der Kosmetik, z.B. im Bereich Haarpflege, vorteilhaft eingesetzt werden. Sie sind weiter geeignet als Bindemittel in Klebemitteln und Beschichtungsmitteln, auch als Schutzbeschichtung z.B. für Metalle, Folien, Holz oder Releasebeschichtung z.B. zur Papierbehandlung.

Besonders geeignet sind sie als Bindemittel für Anstrich-, Klebe- und Beschichtungsmittel im Baubereich. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben, und insbesondere für die Anwendung in emissionsarmen Kunststoffdispersionsfarben und Kunststoffdispersionsputzen, sowohl für den Innenbereich wie den Aussenbereich.

Die nachfolgenden Beispiele dienen zur weiteren Erläuterung der Erfindung, ohne diese in irgendeiner Weise einzuschränken.

### Herstellung der Polymerdispersionen:

### Rohstoffe:

### Genapol X 150:

Ethoxylierter Isotridecylalkohol mit einem Ethoxylierungsgrad von 15.

### PEG:

Polyethylenglykol. Die Zahl gibt das zahlenmittlere Molekulargewicht Mn in g/mol an.

### Mersolat:

Na-Alkylsulfonat mit 12 bis 14 C-Atomen im Alkylrest.

### Airvol V513:

Handelsüblicher Polyvinylalkohol (von Air Products&Chemicals) mit einer Viskosität von ca. 14 mPas (20°C, 4 %-ige Lösung, gemessen nach Höppler) und einer Verseifungszahl von 140 (mg KOH/g Polymer) (Hydrolysegrad 88 ·Mol-%).

### Polyvinylalkohol W25/140:

Polyvinylalkohol mit einer Viskosität von ca. 25 mPas (20°C, 4 %-ige Lösung, gemessen nach Höppler) und einer Verseifungszahl von 140 (mg KOH/g Polymer) (Hydrolysegrad 88 Mol-%).

### Genapol PF80:

EO-PO-Blockpolymerisat mit 80 % EO.

### PDMS-Mischung (Wacker Dehesive® 929):

Gemisch dreier Polydimethylsiloxane mit ca. 100 SiOMe₂-Einheiten, das 5 Gew.-% unfunktionalisiertes Polydimethylsiloxan, 20 Gew.-% α-monovinyl-funktionalisiertes Polydimethylsiloxan und 75 Gew.-% α,ω-divinyl-funktionalisiertes Polydimethylsiloxan enthält.

### Beispiel 1:

In einem 19 Liter Druckautoklaven wurden 2.49 kg Wasser, 465.15 g PEG 35000 (Polyethylenglykol; 20 %-ige Lösung; Mn = 35000 g/mol), 205.81 g Genapol X 150 (40 %-ige wässrige Lösung), 151.86 g Mersolat (30 %-ige wässrige Lösung), 65.86 g Natriumvinylsulfonat (25 %-ig in Wasser), 617.44 g Vinylacetat, 164.65 g PDMS-Mischung und 617.44 g VeoVa 10 vorgelegt. Mit 10 %-iger Ameisensäure wurde auf pH = 5 eingestellt. Ferner wurden 9.7 ml Trilon B (EDTA; 2 %-ige wässrige Lösung) und 30.6 ml Eisenammonsulfat (1 %-ige Lösung) zugegeben. Der Kessel wurde auf 70°C aufgeheizt und es wurden 15 bar Ethylen aufgedrückt. Sobald sich der Reaktor im thermischen Gleichgewicht befand, wurde eine 5.41 %-ige Ammoniumperoxodisulfatlösung (APS-Lösung) mit 68 g pro Stunde und eine 4.16 %-ige Natriumsulfitlösung mit 85 g pro Stunde eingefahren. 25 Minuten später wurde begonnen, eine Mischung von 5.80 kg Vinylacetat, 1.00 kg VeoVa 10 und 42.00 g Vinyltrimethoxysilan (Wacker Silan XL 10) mit einer Rate von 1181 g pro Stunde zu dosieren (Monomerdosierung).
Gleichzeitig wurde eine Emulgatordosierung mit einer Dosierleistung von 449 g pro Stunde eingefahren. Die Emulgatordosierung enthielt 823.25 g Wasser und 1.65 kg Genapol PF 80 (20 %-ige wässrige Lösung). Die Gesamtdosierzeit für die Monomerdosierung belief sich auf 5.8 Stunden, die Emulgatordosierung wurde auf 5.5 Stunden dosiert.
20 min nach dem Reaktionsbeginn wurde die APS-Dosierung auf 42.2 g pro Stunde, die Na-Sulfit-Dosierung auf 52.7 g pro Stunde reduziert.
30 Minuten nach dem Ende der Emulgatordosierung wurde die "GMA-Dosierung" eingefahren. Zusammensetzung der "GMA-Dosierung": 164.65 g Vinylacetat, 24.70 g Veova 10 und 49.4 g Glycidylmethacrylat. Die Dosierzeit betrug 30 Minuten (Rate: 478 g pro Stunde). Nach dem Ende der "GMA-Dosierung" wurde die APS- und Na-Sulfitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.

### Dispersionsanalysen:

Feststoffgehalt: 57.7 %, pH-Wert: 5.0; Brookfield-Viskosität 20 (Spindel 4): 1780 mPas; MFT: 3°C; Glasübergangstemperatur Tg: 9.1°C; mittlere Teilchengröße: 242.3 nm (Nanosizer)

Coulter: Dn 0.111 µm (mittlere Teilchengröße, Zahlenmittel); Dv 0.287 µm (mittlere Teilchengröße, Volumenmittel); Oberfläche 27.8 m²/g Polymerdispersion.

### Beispiel 2:

Wie Beispiel 1 jedoch mit Polyethylenglykol 8000 (in der Vorlage).

### Dispersionsanalysen:

Feststoffgehalt: 59.7 %, pH-Wert: 5.5; Brookfield-Viskosität 20 (Spindel 6): 4200 mPas; MFT: 2°C; Glasübergangstemperatur Tg: 10.1°C; mittlere Teilchengröße: 222.0 nm (Nanosizer) Coulter: Dn 0.099 µm; Dv 0.243 µm; Oberfläche 33.4m²/g Polymerdispersion

### Vergleichsbeispiel 3:

In einem 572 Liter Druckautoklaven wurden 94.88 kg Wasser, 31.15 kg Airvol V513 (Polyvinylalkohol; 10 %ige Lösung), 6.75 kg Genapol X 150 (40 %-ige wässrige Lösung), 3.87 kg Mersolat (40 %ige wässrige Lösung), 2.16 kg Natriumvinylsulfonat (25 %ig in Wasser), 20.26 kg Vinylacetat, 5.40 kg PDMS-Mischung und 20.26 kg VeoVa 10 vorgelegt. Mit 10 %-iger Ameisensäure wurde auf pH = 5 eingestellt. Ferner wurden 314 ml Trilon B (EDTA; 2 %-ige wässrige Lösung) und 991 ml Eisenammonsulfat (1 %-ige Lösung) zugegeben. Der Kessel wurde auf 70°C aufgeheizt und es wurden 13 bar Ethylen aufgedrückt. Sobald sich der Reaktor im thermischen Gleichgewicht befand, wurde eine 10.0 %-ige Ammoniumperoxodisulfatlösung (APS-Lösung) mit 1023 g pro Stunde und eine 5.05 %-ige Natriumsulfitlösung mit 1976 g pro Stunde eingefahren. 25 Minuten später wurde begonnen, eine Mischung von 187.77 kg Vinylacetat, 32.96 kg VeoVa 10 und 1.38 kg Vinyltrimethoxysilan (Wacker Silan XL 10) mit einer Rate von 38.3 kg pro Stunde zu dosieren (Monomerdosierung).

Gleichzeitig wurde eine Emulgatordosierung mit einer Dosierleistung von 10.24 kg pro Stunde eingefahren. Die Emulgatordosierung enthielt 56.29 kg Genapol PF 80 (20 %-ige wässrige Lösung). Die Gesamtdosierzeit für die Monomerdosierung belief sich auf 5.8 Stunden und für die Emulgatordosierung auf 5.5 Stunden.

15 min nach dem Reaktionsbeginn wurde die APS-Dosierung auf 636 g pro Stunde, die Na-Sulfit-Dosierung auf 1226 g pro Stunde reduziert.
30 Minuten nach dem Ende der Emulgatordosierung wurde die "GMA-Dosierung" eingefahren. Zusammensetzung der "GMA-Dosierung": 5.40 kg Vinylacetat, 810.52 g Veova 10 und 1.62 kg Glycidylmethacrylat. Die Dosierzeit betrug 30 Minuten (Rate: 15.68 kg pro Stunde). Nach dem Ende der "GMA-Dosierung" wurde die APS- und Na-Sulfitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.

### Dispersionsanalysen:

Feststoffgehalt: 59.8 %, pH-Wert: 5.3; Brookfield-Viskosität 20 (Spindel 6): 8000 mPas; MFT: 5°C; Glasübergangstemperatur Tg: 11.5°C; mittlere Teilchengröße: 304.1 nm (Nanosizer); Coulter: Dn 0.207 µm; Dv 0.826 µm; Oberfläche 18.9 m²/g Polymerdispersion

### Vergleichsbeispiel 4:

Wie Vergleichsbeispiel 3 jedoch mit dem Polyvinylalkohol W 25/140 anstatt Airvol V513.

### Dispersionsanalysen:

Feststoffgehalt: 58.8 %, pH-Wert: 5.1; Brookfield-Viskosität 20 (Spindel 5): 3820 mPas; MFT: 5°C; Glasübergangstemperatur Tg: 11.4°C; mittlere Teilchengröße: 312.3 nm (Nanosizer) Coulter: Dn 0.124 p; Dv 0.782 µm; Oberfläche 20.2 m²/g Polymerdispersion Zusammenfassung der Analyseergebnisse bei den Dispersionen: Es ist deutlich zu erkennen, dass bei Einsatz von PEG im Vergleich zu PVAL-stabilisierten Dispersionen, mit ansonsten gleichen Emulgatoren, die Teilchengrößenverteilung (TGV) zu niedrigeren Werten verschoben wird. Es wurden demnach mit PEG sehr stabile Dispersionen mit vorteilhafter Teilchengrößenverteilung erhalten. Eine Koagulatbildung und die Ausbildung eines nennenswerten Siebrückstands wurden in keinem einzigen Fall beobachtet. Die Viskosität kann über das Molekulargewicht des Polyvinylalkohols sowie durch das verwendete Emulgatorsystem in einem weiten Bereich variiert werden.

### Anwendungstechnische Prüfung:

Es wurde bei den Dispersionen aus den Beispielen 1 und 2 und den Vergleichsbeispielen V3 und V4 die zeitliche Veränderung der Viskosität ermittelt. Die Messungen erfolgten nach der Brookfield-Methode bei 20 Umdrehungen pro Minute (20 Upm). Je nach Viskosität kamen die Spindeln 4, 5 und 6 zum Einsatz. Tabelle 1 zeigt die Werte für die Viskosität nach Brookfield 20 (BF 20) nach 8 Wochen Lagerzeit bei Raumtemperatur (20°C). Demgegenüber gestellt sind die anfänglichen Viskositätswerte, die kurz nach der Herstellung der Dispersionen ermittelt wurden. Die Änderung der Viskosität wurde - bezogen auf den anfänglichen Wert - in Prozent angegeben. Man kann von einer Viskositätskonstanz sprechen, wenn sich die Änderung im Rahmen der Meßgenauigkeit auf +/- 20 % beläuft.

### Tabelle 1 kann folgendes entnommen werden:

Polyvinylalkohol-stabililisierte Dispersionen neigen dazu, dass deren Viskosität zeitlich nach Lagerung zunimmt (Vergleichsbeispiele V3 und V4). Der Viskositätsaufbau kann sich dabei auf weit über 100 % belaufen (Vergleichsbeispiele V3 und V4). Die Beispiele 1 und 2 belegen schließlich, dass mit einem stabilisierenden System - bestehend aus Polyalkylenoxid und nichtionischen Emulgatoren - eine Viskositätskonstanz erreicht wird. Damit empfiehlt sich dieses System bestens zur Stabilisierung von Emulsionspolymerisaten. Neben der Viskositätskonstanz sind hier des weiteren eine vorteilhafte Teilchengrößenverteilung, keine Koagulatbildung und eine sehr hohe Stabilität der Dispersionen zu nennen.

**Tabelle 1:**

| Beispiel | Viskosität BF 20 [mPas] anfangs | Viskosität BF 20 [mPas] 8 Wochen | Veränderung in % |
|---|---|---|---|
| 1 | 1780 | 1530 | - 14.0 |
| 2 | 4200 | 4150 | - 1.2 |
| V3 | 8000 | 17000 | + 112.5 |
| V4 | 3820 | 11000 | + 188.0 |

## Patentansprüche

1. Verfahren zur Herstellung von Polyvinylalkohol-freien, wässrigen Polymerdispersionen mittels radikalischer Polymerisation von einem oder mehreren ethylenisch ungesättigten Monomeren in wässrigem Medium, **dadurch gekenzeichnet, dass** die Polymerisation in Gegenwart eines Stabilisatorsystems durchgeführt wird, enthaltend
a) ein oder mehrere Polyalkylenoxide mit gleichen oder verschiedenen Struktureinheiten aus der Gruppe umfassend -(CH₂)ₙ-O- mit n = 2 bis 4, -CH₂-CHR-O- mit R = C₁- bis C₁₅-Alkyl, -CH₂-CHOR'-O- mit R' = H, C₁- bis C₁₅-Alkyl, welche im Falle von Alkylenoxid-Mischpolymerisaten die Alkylenoxid-Einheiten in statistischer Verteilung enthalten, und mit gleichen oder verschiedenen Endgruppen R" aus der Gruppe umfassend H-, OH-Gruppe, Alkyl-Gruppe und O-Alkyl-Gruppe, wobei der Alkylrest unverzweigt oder verzweigt sein kann und ein C₁- bis C₄-Alkylrest ist, und
b) ein oder mehrere Blockcopolymere aus mindestens zwei verschiedenen Alkylenoxiden mit 2 bis 4 C-Atomen.

2. Verfahren nach Anspruch 1, **dadurch gekennzeichnet, dass** als Polyalkylenoxide solche verwendet werden, mit den Struktureinheiten -(CH₂)ₙ-O- mit n = 2 bis 4, welche gleiche oder verschiedene Endgruppen enthalten, aus der Gruppe umfassend H-, OH-, CH₃-, CH₃O-, C₂H₅-, C₂H₅O-Gruppe.

3. Verfahren nach Anspruch 1, **dadurch gekennzeichnet, dass** dass als Polyalkylenoxide solche verwendet werden aus der Gruppe umfassend Polyethylenglykole (PEO), Polypropylenglykole (PPO) sowie Mischpolymerisate, welche Ethylenoxid- und Propylenoxid-Einheiten statistisch verteilt enthalten.

4. Verfahren nach Anspruch 1 bis 3, **dadurch gekennzeichnet, dass** das zahlenmittlere Molekulargewicht Mn der Polyalkylenoxide 100 bis 100000 g/mol beträgt.

5. Verfahren nach Anspruch 1 bis 4, **dadurch gekennzeichnet, dass** 0.1 bis 10 Gew.-% Polyalkylenglykol, jeweils bezogen auf das Gesamtgewicht der Monomere, eingesetzt werden.

6. Verfahren nach Anspruch 1 bis 5, **dadurch gekennzeichnet, dass** 0.5 bis 10 Gew.-% nichtionischer Emulgator b), bezogen auf das Gesamtgewicht der Monomere, eingesetzt werden.

7. Verfahren nach Anspruch 1 bis 6, **dadurch gekennzeichnet, dass** als ethylenisch ungesättigte Monomere solche eingesetzt werden, aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide.

8. Verfahren nach Anspruch 1 bis 7, **dadurch gekennzeichnet, dass** noch 0.05 bis 30 Gew.-%, bezogen auf das Gesamtgewicht der ethylenisch ungesättigten Monomere, Hilfsmonomere copolymerisiert werden.

9. Verfahren nach Anspruch 8, **dadurch gekennzeichnet, dass** als Hilfsmonomere ein oder mehrere copolymerisiert werden aus der Gruppe umfassend ethylenisch ungesättigte Mono- und Dicarbonsäuren, polymerisierbare Silane und Merkaptosilane, Epoxy-funktionelle (Meth)acrylate, polymerisierbare Silikonmakromere mit mindestens einer ungesättigten Gruppe.

10. Verwendung der gemäß Anspruch 1 bis 9 erhältlichen Copolymerisate in Form deren wässrigen Dispersionen und in Wasser redispergierbaren Pulver, in Klebemitteln und Beschichtungsmitteln, zur Verfestigung von Fasern oder anderen partikulären Materialien.

11. Verwendung der gemäß Anspruch 1 bis 9 erhältlichen Copolymerisate, in Form deren wässrigen Dispersionen und in Wasser redispergierbaren Pulver, als Modifizierungsmittel, Hydrophobierungsmittel, als Schutzbeschichtung oder Releasebeschichtung.

12. Verwendung der gemäß Anspruch 1 bis 9 erhältlichen Copolymerisate, in Form deren wässrigen Dispersionen und in Wasser redispergierbaren Pulver, als Bindemittel für Anstrich-, Klebe- und Beschichtungsmittel im Baubereich.

## Claims

1. Process for preparing polyvinyl alcohol-free, aqueous polymer dispersions by means of free-radical polymerization of one or more ethylenically unsaturated monomers in an aqueous medium, **characterized in that** the polymerization is carried out in the presence of a stabilizer system comprising
a) one or more polyalkylene oxides having like or different structural units from the group encompassing -(CH₂)ₙ-O- with n = 2 to 4, -CH₂-CHR-O- with R = C₁ to C₁₅ alkyl, -CH₂-CHOR'-O- with R' = H, C₁ to C₁₅ alkyl, which in the case of alkylene oxide copolymers contain the alkylene oxide units in random distribution, and with like or different end groups R'' from the group encompassing H-, OH group, alkyl group and O-alkyl group, it being possible for the alkyl radical to be unbranched or branched, and the alkyl radical being a C₁ to C₄ alkyl radical, and
b) one or more block copolymers of at least two different alkylene oxides having 2 to 4 C atoms.

2. Process according to Claim 1, **characterized in that** polyalkylene oxides used are those with the structural units -(CH₂)ₙ-O with n = 2 to 4 which contain like or different end groups from the group encompassing H, OH, CH₃, CH₃O, C₂H₅ and C₂H₅O.

3. Process according to Claim 1, **characterized in that** polyalkylene oxides used are those from the group encompassing polyethylene glycols (PEO), polypropylene glycols (PPO) and also copolymers containing ethylene oxide and propylene oxide units in random distribution.

4. Process according to Claim 1 to 3, **characterized in that** the number-average molecular weight Mn of the polyalkylene oxides is 100 to 100 000 g/mol.

5. Process according to Claim 1 to 4, **characterized in that** 0.1% to 10% by weight of polyalkylene glycol is used, based in each case on the total weight of the monomers.

6. Process according to Claim 1 to 5, **characterized in that** 0.5% to 10% by weight of non-ionic emulsifier b) is used, based in each case on the total weight of the monomers.

7. Process according to Claim 1 to 6, **characterized in that** ethylenically unsaturated monomers used are those from the group encompassing vinyl esters of unbranched or branched alkylcarboxylic acids having 1 to 15 C atoms, methacrylic esters and acrylic esters of alcohols having 1 to 15 C atoms, vinylaromatics, olefins, dienes and vinyl halides.

8. Process according to Claim 1 to 7, **characterized in that** additionally 0.05% to 30% by weight, based on the total weight of the ethylenically unsaturated monomers, of auxiliary monomers is copolymerized.

9. Process according to Claim 8, **characterized in that** as auxiliary monomers one or more are copolymerized from the group encompassing ethylenically unsaturated monocarboxylic and dicarboxylic acids, polymerizable silanes and mercaptosilanes, epoxy-functional (meth)acrylates and polymerizable silicone macromers having at least one unsaturated group.

10. Use of the copolymers obtainable according to Claim 1 to 9, in the form of their aqueous dispersions and water-redispersible powders, in adhesives and coating materials, for strengthening fibres or other particulate materials.

11. Use of the copolymers obtainable according to Claim 1 to 9, in the form of their aqueous dispersions and water-redispersible powders, as modifiers, hydrophobizers, or as a protective coating or release coating.

12. Use of the copolymers obtainable according to Claim 1 to 9, in the form of their aqueous dispersions and water-redispersible powders, as binders for paints, adhesives and coating materials in the construction sector.

## Revendications

1. Procédé de fabrication de dispersions de polymères aqueuses exemptes d'alcools polyvinyliques par polymérisation radicalaire d'un ou plusieurs monomère(s) éthyléniquement insaturé(s) en milieu aqueux, **caractérisé en ce que** la polymérisation est effectuée en présence d'un système stabilisant contenant
a) un ou plusieurs oxyde(s) de polyalkylène(s) comportant des unités structurelles identiques ou différentes parmi :
-(CH₂)ₙ-O- avec n = 2 à 4, -CH₂-CHR-O- avec R = alkyle en C₁ à C₁₅, -CH₂-CHOR'-O- avec R' = H, alkyle en C₁ à C₁₅, qui contiennent, dans le cas des copolymérisats d'oxydes d'alkylènes, les unités d'oxydes d'alkylènes en distribution statistique, et avec des groupes d'extrémité R'' identiques ou différents, parmi un atome d'hydrogène, un groupe OH, un groupe alkyle et un groupe O-alkyle, le radical alkyle pouvant être non ramifié ou ramifié, et étant un radical alkyle en C₁ à C₄, et
b) un ou plusieurs copolymères séquencés constitués d'au moins 2 oxydes d'alkylènes différents comportant 2 à 4 atomes de carbone.

2. Procédé selon la revendication 1, **caractérisé en ce qu'**on utilise, comme oxydes de polyalkylènes, des oxydes de polyalkylènes comportant les unités structurelles -(CH₂)ₙ-O- avec n = 2 à 4, qui contiennent des groupes d'extrémité identiques ou différents, parmi un atome d'hydrogène, un groupe OH, CH₃, CH₃O, C₂H₅, C₂H₅O.

3. Procédé selon la revendication 1, **caractérisé en ce qu'**on utilise, comme oxydes de polyalkylènes, des oxydes de polyalkylènes appartenant au groupe comprenant des polyéthylèneglycols (PEO), des polypropylèneglycols (PPO) ainsi que des copolymérisats qui contiennent des unités d'oxyde d'éthylène et d'oxyde de propylène distribuées de manière statistique.

4. Procédé selon les revendications 1 à 3, **caractérisé en ce que** le poids moléculaire moyen en poids Mn des oxydes de polyalkylènes est de 100 à 100 000 g/mole.

5. Procédé selon les revendications 1 à 4, **caractérisé en ce qu'**on utilise 0,1 à 10% en poids de polyalkylèneglycol, à chaque fois par rapport au poids total des monomères.

6. Procédé selon les revendications 1 à 5, **caractérisé en ce qu'**on utilise 0,5 à 10% en poids d'émulsionnant non ionique b), par rapport au poids total des monomères.

7. Procédé selon les revendications 1 à 6, **caractérisé en ce qu'**on utilise, comme monomères éthyléniquement insaturés, des monomères éthyléniquement insaturés appartenant au groupe des esters vinyliques d'acides alkylcarboxyliques non ramifiés ou ramifiés comportant 1 à 15 atomes de carbone, des esters d'acide méthacrylique et des esters d'acide acrylique d'alcools comportant 1 à 15 atomes de carbone, des composés vinylaromatiques, des oléfines, des diènes et des halogénures de vinyle.

8. Procédé selon les revendications 1 à 7, **caractérisé en ce que** sont encore copolymérisés 0,05 à 30% en poids, par rapport au poids total des monomères éthyléniquement insaturés, de monomères auxiliaires.

9. Procédé selon la revendication 8, **caractérisé en ce que** sont copolymérisés, comme monomères auxiliaires, un ou plusieurs monomère(s) appartenant au groupe comprenant des acides mono- et dicarboxyliques éthyléniquement insaturés, des silanes et des mercaptosilanes polymérisables, des (méth)acrylates à fonctionnalité époxy, des macromères de silicone polymérisables comportant au moins un groupe insaturé.

10. Utilisation des copolymérisats pouvant être obtenus selon les revendications 1 à 9, sous forme de leurs dispersions aqueuses et de poudres redispersables dans l'eau, dans des produits adhésifs et des produits de revêtement pour la consolidation de fibres et autres matériaux particulaires.

11. Utilisation des copolymérisats pouvant être obtenus selon les revendications 1 à 9, sous forme de leurs dispersions aqueuses et de poudres redispersables dans l'eau, comme agents de modification, agents hydrofugeants, revêtement de protection ou revêtement anti-adhésif.

12. Utilisation des copolymérisats pouvant être obtenus selon les revendications 1 à 9, sous forme de leurs dispersions aqueuses et de poudres redispersables dans l'eau, comme liants pour les produits d'enduction, de collage et de revêtement, dans le secteur du bâtiment.
